# EUROPÄISCHE PATENTSCHRIFT

(11) **EP 3 803 176 B1**
(45) Veröffentlichungstag und Bekanntmachung des Hinweises auf die Patenterteilung: **31.07.2024**
(21) Anmeldenummer: 19729264.2
(22) Anmeldetag: 06.06.2019
(51) Int. Cl.: F16L 13/14

(54) **VORRICHTUNG MIT EINEM METALLROHR UND MIT EINEM FITTING**
DEVICE COMPRISING A METAL PIPE AND A FITTING
DISPOSITIF COMPRENANT UN RACCORD ET UN TUBE

(30) Priorität: 08.06.2018 DE 102018113713
(43) Veröffentlichungstag der Anmeldung: 14.04.2021
(73) Patentinhaber: Viega Technology GmbH & Co. KG, 57439 Attendorn (DE)
(72) Erfinder: HESSE, Christian, 57439 Attendorn (DE)
(74) Vertreter: Cohausz & Florack
(86) Internationale Anmeldenummer: PCT/EP2019/064761
(87) Internationale Veröffentlichungsnummer: WO 2019/234140

(56) Entgegenhaltungen:
- EP-A2- 1 195 550
- WO-A1-2016/055720
- DE-U1- 202015 105 417
- US-A- 6 131 964

## Beschreibung

Die Erfindung betrifft eine Vorrichtung aufweisend ein Metallrohr und einen Fitting zum Herstellen einer metallischen Verbindung, wobei der Fitting einen aus Metall hergestellten Grundkörper, mindestens einen einteilig mit dem Grundkörper ausgebildeten und aus Metall bestehenden Stützkörper zum Einführen in ein Rohrende und mindestens eine mit dem Grundkörper verbundene und aus Metall bestehende Presshülse zum Aufnehmen des Rohrendes aufweist, wie im DE202015105417U1 dargestellt.

Der für die vorliegende Erfindung relevante technische Bereich ist die baustellenseitige Installation von Rohrleitungssystemen, bei der allgemein für das Leiten und Führen eines Fluids ein aus Rohrabschnitten und Fittings bestehendes Rohrleitungssystem installiert wird. Als Fitting wird grundsätzlich ein Verbindungsstück einer Rohrleitung verstanden und wird am häufigsten zur Verbindung von zwei oder mehreren Rohrabschnitten eingesetzt. Der Fitting weist dementsprechend zwei oder mehr Pressabschnitte auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist dieser Fitting dann nur einen Pressabschnitt auf, um einen Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels eines Presswerkzeugs radial nach innen so umgeformt wird, dass eine dauerhafte und dichte, gegebenenfalls sogar unlösbare Verbindung hergestellt wird. Die Fittings können dabei mittels eines direkten Kontakts der Materialien des Rohrabschnitts und des Fittings, beispielweise metallisch dichtend ausgebildet sein.

Die eingangs genannten Fittings finden insbesondere Anwendung in der medizinischen Gasversorgung, aber auch allgemein in der Kälte- und Klimatechnik, Industrie- und Hochdruckanwendungen sowie grundsätzlich in der Gasversorgung. Die Fittings erlaubten dabei bisher nur zeitaufwändige Verbindungsarten wie das Hartlöten oder das Schweißen, die teilweise in der medizinischen Anwendung bisher allein erlaubt sind. Diese Verbindungen weisen ein großes Fehlerpotential bei der Herstellung und der Installation auf. Rohrverbindungselemente, die kunststoffbasierte Dichtelemente enthalten, sind zudem verboten.

Aus dem Stand der Technik sind für metallisch dichtende Verbindungen zwischen Fitting und Rohr bekannt, bei denen zum Erzeugen der notwendigen hohen Presskräfte axial wirkende Presswerkzeuge bekannt, bei denen eine Schiebehülse mit einer konisch oder anderweitig zulaufenden Innenkontur auf Presselemente innerhalb des Fittings aufgeschoben werden, um diese radial nach innen umzuformen. Axial wirkende Presswerkzeuge sind aber in der Regel aufwändig und wenig platzsparend.

Derartige Verbindungen haben den weiteren Nachteil, nur eine ungenügende Dichtigkeit bei mechanischer Belastung, insbesondere bei Torsionsbelastung aufzuweisen, da die abdichtenden Teile des Fittings auch die mechanische Belastung aufnehmen müssen.

Daher liegt der vorliegenden Erfindung das technische Problem zugrunde, die Zuverlässigkeit und die mechanische Belastbarkeit der herzustellenden metallischen Verbindung zwischen einem Metallrohr und dem Fitting zu verbessern.

Das zuvor aufgeführte technische Problem wird erfindungsgemäß durch eine Vorrichtung mit den Merkmalen des Anspruchs 1 gelöst.

Der Stützkörper weist einen ersten am distalen Ende angeordneten ersten Dichtabschnitt mit mindestens einem radial umlaufenden und nach außen vorstehenden Dichtzahn, einen sich an den ersten Dichtabschnitt in axialer Richtung anschließenden Haltebereich mit umfangseitig verteilt angeordneten und axial verlaufenden Haltezähnen und einen sich an den Haltebereich in axialer Richtung anschließenden zweiten Dichtabschnitt mit mindestens einem radial umlaufenden und nach außen vorstehenden Dichtzahn auf und der Stützkörper und die Presshülse sind geeignet, mittels der Dichtzähne eine metallische Abdichtung mit dem Metallrohr ohne eine zusätzliche Weichdichtung zu ermöglichen.

Somit wird erfindungsgemäß eine metallische Abdichtung durch den Einschnitt umlaufender Dichtzähne in ein anzuschließendes Rohr erreicht. Zudem erfolgt eine Trennung von Dichtfunktion und mechanischer Lastaufnahme, um Undichtigkeiten der Verbindung zwischen dem Fitting und dem Rohr bei Belastung zu verhindern. Durch eine metallisch dichtende Verpresstechnik wird ohne Einsatz von Weichdichtungen wie polymeren Dichtungswerkstoffen ein Einsatz des Fittings bei medizinischen Gasinstallationen aber auch bei anderen Anwendungen möglich.

Die mindestens zwei umlaufenden und nach außen vorstehenden Dichtzähne der beiden Dichtabschnitte schneiden beim Verpressen in das Rohr ein und dichten so von innen zwischen Stützkörper und eingeschobenem Rohr ab. An einer von den Dichtabschnitten verschiedenen Position ist eine in axialer Richtung verlaufende Kontur in Form der Haltezähne eingearbeitet, die ein Relativbewegung zwischen dem Rohr und dem Stützkörper, insbesondere im Falle einer Torsionsbewegung durch Form- und Reibschluss verhindert, zumindest aber verringert.

In bevorzugter Weise weist das Metall des Stützkörpers eine größere Härte als das Metall der Presshülse auf. Der Fitting besteht also aus mindestens einer vormontierten äußeren Presshülse und einem zugeordneten inneren Stützkörper, die jeweils aus Werkstoffen mit verschiedenen Eigenschaften bestehen. Die Werkstoffpaarung ermöglicht es, eine starke plastische Verformung der äußeren Presshülse mit einer Verformung des inneren Stützkörpers zu kombinieren, der eine gezielte elastische Reserve nach der Verpressung aufweist. Durch die elastische Reserve nach der Verformung neigt der innere Stützkörper zum Auffedern, wodurch eine bleibende Flächenpressung zum Rohr erzielt wird.

Der Werkstoff des inneren Stützkörpers ist fester und härter als der Werkstoff der Presshülse, so dass gilt Reᵢₙₙₑₙ/Re_{außen}> 1. Dabei bezeichnet Re die Streckgrenze des Metalls. Das angegebene Verhältnis charakterisiert die Festigkeiten von äußerer zu innerer Hülse im Hinblick auf das Plastifizierungsverhalten. Das Verhältnis soll bei allen Metallkombinationen bei > 1 liegen.

Die Werkstoffeigenschaften können insbesondere durch eine gezielte Wärmebehandlung eingestellt werden. Folgende Werkstoffkombinationen sind beispielsweise denkbar, wobei jeweils zunächst das Metall der Presshülse und dann das Metall des Stützkörpers bzw. des Grundkörpers genannt wird:
Kupfer-Messing, Messing-Messing, Kupfer-Kupfer, Kupfer-Stahl, Alu-Stahl, Alu-Messing, Paare aus Cu-Sn-Legierungen, Siliziumbronze-Messing.

Insbesondere weisen der erste Dichtabschnitt und der zweite Dichtabschnitt jeweils zwei beabstandete umlaufende Dichtzähne auf, so dass die Eigenschaften des Fittings weiter verbessert werden. Die Dichtheit der Pressverbindung wird dadurch auch bei starken einwirkenden Kräften aufrecht gehalten.

Weiter bevorzugt ist, dass der Haltebereich mindestens 10, insbesondere 16 axial verlaufende Haltezähne aufweist. Dadurch wird eine ausreichend dichte gleichmäßig verteilte Anordnung von Haltezähnen erreicht, wodurch die einwirkenden Kräfte, insbesondere Torsionskräfte, weitgehend, wenn nicht ganz aufgefangen werden.

Des Weiteren ist es bevorzugt, dass die Presshülse eine im Wesentlichen zylindrische Innenkontur und eine abschnittsweise zylindrische Außenkontur aufweist, wobei ein erster in axialer Richtung mittig angeordneter Abschnitt, ein in distaler Richtung benachbarter zweiter Abschnitt und entgegen der distalen Richtung benachbarter dritter Abschnitt ausgebildet sind, wobei die Materialstärke des mittig angeordneten Abschnitts größer als die Materialstärke der benachbarten zweiten und dritten Abschnitte ausgebildet ist.

Eine weitere Maßnahme betrifft das zu verbindende Rohr. Um eine Querschnittsverengung und damit verbundene Druckverluste durch den Stützkörper an der Verbindungsstelle zu vermeiden, ist eine gezielte Aufweitung des Rohrquerschnitts möglich. Somit kann der Innendurchmesser des Stützkörpers an den Innendurchmesser des nicht aufgeweiteten Rohrs angepasst werden.

Im Folgenden wird die Erfindung anhand von Ausführungsbeispielen mit Bezug auf die Zeichnung erläutert. In der Zeichnung zeigen
- Fig. 1: ein erstes Ausführungsbeispiel einer Vorrichtung mit einem Fitting und mit einem eingesetzten Rohr im Längsschnitt,
- Fig. 2: den Grundkörper mit Stützkörper des ersten Ausführungsbeispiels im Längsschnitt,
- Fig. 3: den Grundkörper mit Stützkörper des ersten Ausführungsbeispiels in einer perspektivischen Ansicht,
- Fig. 4: den Grundkörper mit Stützkörper des ersten Ausführungsbeispiels im Querschnitt,
- Fig. 5: die Presshülse des ersten Ausführungsbeispiels im Längsschnitt,
- Fig. 6: die Presshülse des ersten Ausführungsbeispiels in einer perspektivischen Ansicht,
- Fig. 7: einen Grundkörper mit Stützkörper eines zweiten Ausführungsbeispiels eines Fittings im Längsschnitt und
- Fig. 8: den Grundkörper des zweiten Ausführungsbeispiels in einer perspektivischen Ansicht.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

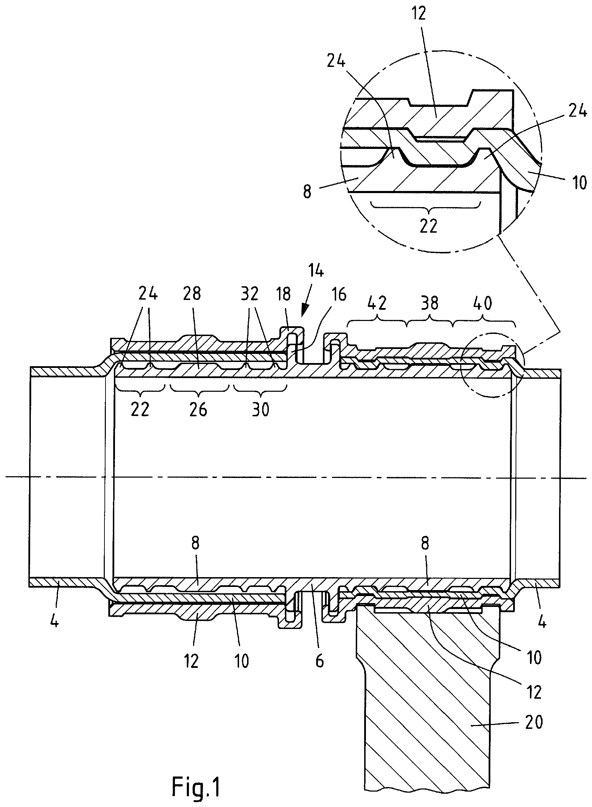

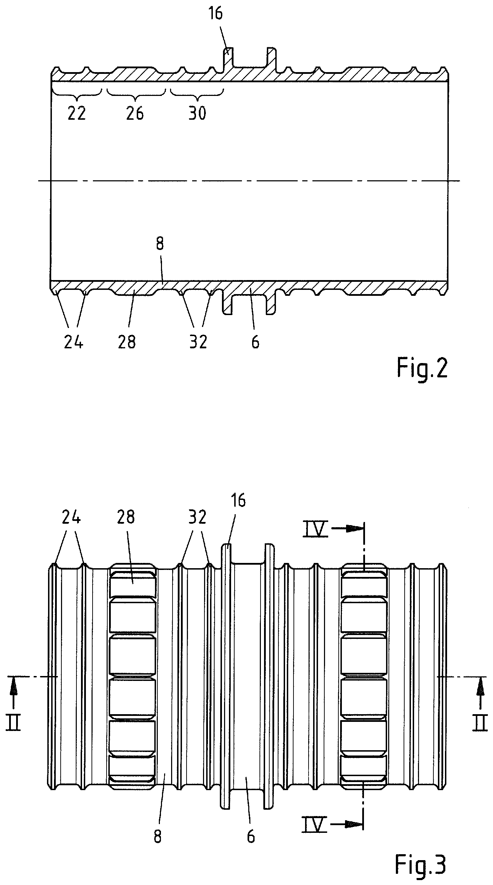

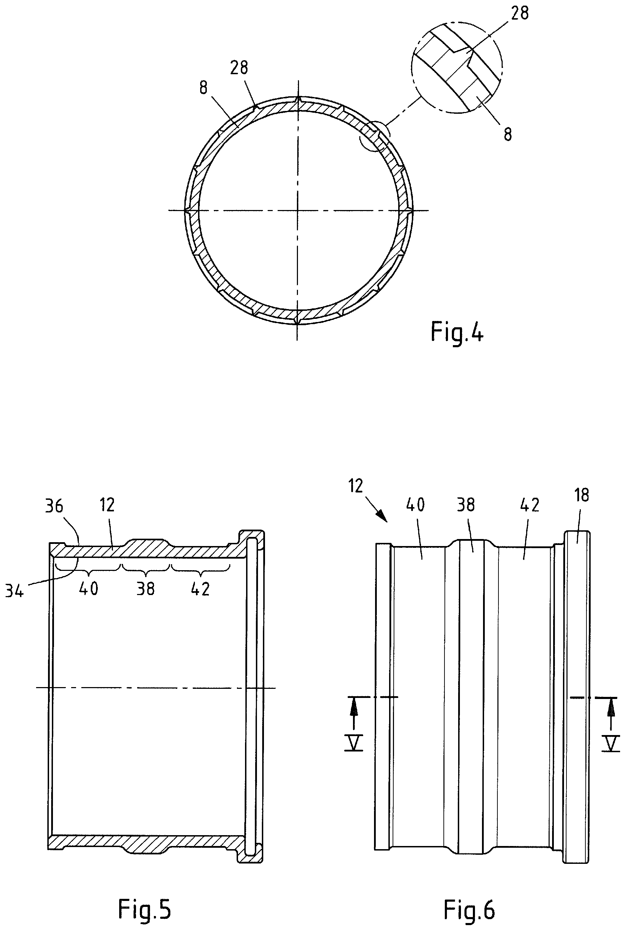

Die Fig. 1 bis 6 zeigen ein erstes Ausführungsbeispiel einer Vorrichtung mit einem Metallrohr 4 und mit einem Fitting 2 zum Herstellen einer metallischen Verbindung. Der Fitting 2 weist einen aus Metall hergestellten Grundkörper 6 und mindestens einen einteilig mit dem Grundkörper 6 ausgebildeten und aus Metall bestehenden Stützkörper 8 zum Einführen in ein Rohrende 10 des Metallrohrs 4 auf. Des Weiteren ist mindestens eine mit dem Grundkörper 6 verbundene und aus Metall bestehende Presshülse 12 zum Aufnehmen des Rohrendes 10 mit dem Grundkörper 6 mittels einer mechanischen Verbindung 14 bestehend aus einem am Grundkörper 6 ausgebildeten Steg 16 und einer an der Presshülse 12 ausgebildeten nach innen gerichteten Kragen 18 verbunden, der den Steg 16 umgreift.

Der Stützkörper 8 und die Presshülse 12 sind für ein radiales Verpressen eingerichtet, können also durch eine im Wesentlichen radial nach innen gerichtete Presskraft verpresst werden. Dazu ist in Fig. 1, rechte Seite, ein von unten an die Presshülse 12 angesetztes Presswerkzeug 20 dargestellt, dessen Gegenstück der besseren Übersichtlichkeit wegen an der Oberseite der Presshülse weggelassen worden ist.

Erfindungsgemäß weist der Stützkörper 12 die folgenden Elemente auf. Ein erster Dichtabschnitt 22 ist am distalen Ende des Stützkörpers 12 angeordnet, der beim vorliegenden Ausführungsbeispiel zwei radial umlaufende Dichtzähne 24 aufweist. Des Weiteren ist ein sich an den ersten Dichtabschnitt 22 in axialer Richtung anschließender Haltebereich 26 angeordnet, der umfangseitig verteilt angeordnete und axial verlaufende Haltezähne 28 aufweist. Die Anzahl der Haltezähne 28 beträgt bei dem dargestellten Ausführungsbeispiel 16. Weiterhin weist der Stützkörper 12 einen sich an den Haltebereich 26 in axialer Richtung anschließenden zweiten Dichtabschnitt 30 auf, der ebenfalls beim vorliegenden Ausführungsbeispiel zwei radial umlaufende Dichtzähne 32 aufweist.

Wie den Fig. 1 sowie 5 und 6 weiterhin zu entnehmen ist, weist die Presshülse 12 eine im Wesentlichen zylindrische Innenkontur 34 und eine abschnittsweise zylindrische Außenkontur 36 auf. Ein erster in axialer Richtung mittig angeordneter Abschnitt 38, ein in distaler Richtung benachbarter zweiter Abschnitt 40 und entgegen der distalen Richtung benachbarter dritter Abschnitt 42 sind ausgebildet, wobei die Materialstärke des mittig angeordneten Abschnitts 38 größer als die Materialstärke der benachbarten Abschnitte 40 und 42 ausgebildet ist.

Fig. 1 zeigt in einen Fitting 2 mit zwei Stützkörpern 8 und zwei Presshülsen 12, wobei der Fitting 2 auf der linken Seite unverpresst und auf der rechten Seite verpresst ist.

Im unverpressten Zustand kann das Rohrende 10 zwischen die Außenkontur des Stützkörpers 8 und der Innenseite der Presshülse 12 eingeschoben und positioniert werden. Im dargestellten Ausführungsbeispiel ist das Rohrende 10 gegenüber dem übrigen Metallrohr 4 aufgeweitet, so dass der Innendurchmesser des Metallrohres 4 und der Innendurchmesser des Stützkörpers 8 und somit des Grundkörpers 6 im Wesentlichen gleich groß sind, so dass durch den Fitting 2 auch im verpressten Zustand keine Verringerung des Strömungsquerschnitts erzeugt wird.

Die rechte Seite von Fig. 1 zeigt den Fitting 2 im verpressten Zustand, zur Veranschaulichung ist an der Unterseite der Presshülse 12 ein Teil eines Presswerkzeugs in Form einer Pressbacke 20 dargestellt. Die Innenkontur der Pressbacke 20 weist an den in axialer Richtung distalen Enden jeweils einen Vorsprung 50 auf, der das Rohrende 10 zusammen mit der Presshülse 12 so auf die beiden umlaufenden Dichtzähne 24 bzw. 32 aufpresst, dass eine dichte metallische Verbindung zwischen der Außenseite des Stützkörpers 8 und der Innenseite des Rohrendes 10 an beiden Dichtabschnitten 22 und 30 entsteht. Fig. 1 zeigt in einer Vergrößerung ein Detail mit der metallischen Verbindung an den Dichtzähnen 24.

Der mittig angeordnete Haltebereich 38 der Presshülse 12 ist von der Pressbacke 20 nach innen gedrückt worden, so dass das Rohrende 10 in diesem Abschnitt auf die Haltezähne 28 des Haltebereichs 26 aufgepresst worden ist. Somit entsteht eine Sicherung der Presshülse 12 und des Rohrendes 10 gegenüber Torsionsmomenten und Schwerkräften und ein ungewolltes Verdrehen der verpressten Verbindung wird vermieden bzw. weitgehend verhindert.

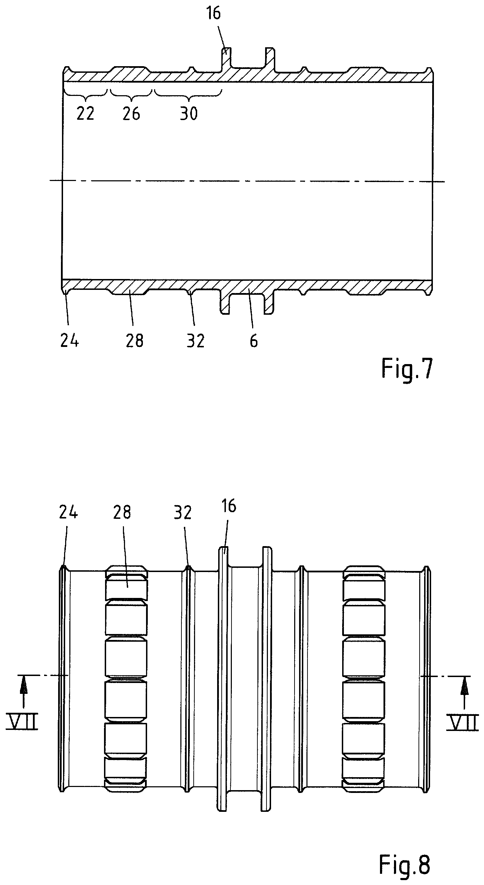

Die Fig. 7 und 8 zeigen einen Fitting 2 eines zweiten Ausführungsbeispiels, bei dem der Stützkörper 8 in beiden Dichtabschnitten 22 und 30 jeweils nur einen Dichtzahn 24 bzw. 32 aufweist. Die Presshülse 12 ist dabei unverändert zum ersten Ausführungsbeispiel. Auch dieser Fitting führt zu einer dichten und stabilen metallischen Verbindung zwischen dem Rohrende 10 und dem Stützkörper 8.

Um das sichere Erzeugen einer metallische dichten Verbindung zu erreichen, ist vorgesehen, dass das Metall des Stützkörpers 8 eine größere Härte als das Metall der Presshülse 12 aufweist. Somit lässt sich die Presshülse 12 beim Verpressen plastisch verformen, während der Stützkörper 8 weitgehend oder vollständig sein Form behält.

## Patentansprüche

1. Vorrichtung
- mit einem Metallrohr und
- mit einem Fitting zum Herstellen einer metallischen Verbindung mit dem Metallrohr,
- wobei der Fitting aufweist
- einen aus Metall hergestellten Grundkörper (6),
- mindestens einen einteilig mit dem Grundkörper (6) ausgebildeten und aus Metall bestehenden Stützkörper (8) zum Einführen in ein Rohrende und
- mindestens eine mit dem Grundkörper (6) verbundene und aus Metall bestehende Presshülse (12) zum Aufnehmen des Rohrendes, und
- wobei der Stützkörper (8) und die Presshülse (12) für ein radiales Verpressen eingerichtet sind,
- wobei der Stützkörper (8)
- einen ersten am distalen Ende angeordneten ersten Dichtabschnitt (22) mit mindestens einem radial umlaufenden und nach außen vorstehenden Dichtzahn (24),
- einen sich an den ersten Dichtabschnitt (22) in axialer Richtung anschließenden Haltebereich (26) mit umfangseitig verteilt angeordneten und axial verlaufenden Haltezähnen (28) und
- einen sich an den Haltebereich (26) in axialer Richtung anschließenden zweiten Dichtabschnitt (30) mit mindestens einem radial umlaufenden und nach außen vorstehenden Dichtzahn (32) aufweist und
- wobei der Stützkörper (8) und die Presshülse (12) geeignet sind, mittels der Dichtzähne (24, 32) eine metallische Abdichtung mit dem Metallrohr ohne eine zusätzliche Weichdichtung zu ermöglichen.

2. Vorrichtung nach Anspruch 1,
**dadurch gekennzeichnet,**
- **dass** der erste Dichtabschnitt (22) und der zweite Dichtabschnitt (30) jeweils zwei beabstandete umlaufende Dichtzähne (24, 32) aufweisen.

3. Vorrichtung nach Anspruch 1 oder 2,
**dadurch gekennzeichnet,**
- **dass** der Haltebereich (26) mindestens 10, insbesondere 16 axial verlaufende Haltezähne (28) aufweist.

4. Vorrichtung nach einem der Ansprüche 1 bis 3,
**dadurch gekennzeichnet,**
- **dass** die Presshülse (12) eine im Wesentlichen zylindrische Innenkontur und eine abschnittsweise zylindrische Außenkontur aufweist,
- wobei ein erster in axialer Richtung mittig angeordneter Abschnitt (38), ein in distaler Richtung benachbarter zweiter Abschnitt (40) und entgegen der distalen Richtung benachbarter dritter Abschnitt (42) ausgebildet sind,
- wobei die Materialstärke des mittig angeordneten Abschnitts (38) größer als die Materialstärke der benachbarten Abschnitte (40, 42) ausgebildet ist.

5. Vorrichtung nach einem der Ansprüche 1 bis 4,
**dadurch gekennzeichnet,**
- **dass** das Metall des Stützkörpers (8) eine größere Härte als das Metall der Presshülse (12) aufweist.

## Claims

1. Device
- with a metal pipe and
- with a fitting for making a metallic connection with a metal pipe,
- wherein the fitting includes
- a basic body made of metal (6),
- at least one supporting body (8) made of metal and formed in one piece with the base body (6) for insertion into a pipe end and
- at least one pressing sleeve (12) connected to the base body (6) and made of metal for receiving the pipe end,
- wherein the support body (8) and the pressing sleeve (12) are designed for radial pressing,
- wherein the supporting body (8) includes
- a first sealing section (22) arranged at the distal end and having at least one radially encircling and radially outwardly projecting sealing tooth (24),
- a retaining region (26) adjoining the first sealing section (22) in the axial direction and having retaining teeth (28) distributed around the circumference and extending axially, and
- a second sealing section (30) adjoining the retaining area (26) in the axial direction with at least one radially encircling and radially outwardly projecting sealing tooth (32), and
- wherein the support body (8) and the pressing sleeve (12) are able to obtain by means of the sealing teeth (24, 32) a metallic sealing with the metal pipe without any additional soft seal.

2. Device according to claim 1,
**characterised in,**
- **that** the first sealing section (22) and the second sealing section (30) each have two spaced peripheral sealing teeth (24, 32).

3. Device according to claim 1 or 2,
**characterised in,**
- **that** the holding area (26) has at least 10, in particular 16 axially extending holding teeth (28).

4. Device according to one of the claims 1 to 3,
**characterised in,**
- **that** the press sleeve (12) has a substantially cylindrical inner contour and a sectionally cylindrical outer contour,
- wherein a first portion (38) is formed centrally in the axial direction, a second portion (40) is formed adjacent in the distal direction, and a third portion (42) is formed adjacent opposite to the distal direction,
- wherein the material thickness of the centrally arranged section (38) is greater than the material thickness of the adjacent sections (40, 42).

5. Device according to one of the claims 1 to 4
**characterised in,**
- **that** the metal of the supporting body (8) has a greater hardness than the metal of the pressing sleeve (12).

## Revendications

1. Dispositif
- avec un tube métallique et
- avec un raccord pour réaliser une connexion métallique avec le tube métallique,
- le raccord comprenant
- un corps de base (6) réalisé en métal,
- au moins un corps d'appui (8) réalisé d'une seule pièce avec le corps de base (6) et composé de métal pour introduction dans une extrémité de tube et
- au moins une douille de pressage (12) reliée au corps de base (6) et constituée de métal pour recevoir l'extrémité du tube, et
- le corps d'appui (8) et la douille de pressage (12) étant configurés pour un pressage radial,
- le corps de support (8) comprenant
- une première section d'étanchéité (22) disposée à l'extrémité distale avec au moins une dent d'étanchéité (24) périphérique radiale et faisant saillie vers l'extérieur,
- une zone de retenue (26) se raccordant à la première section d'étanchéité (22) en direction axiale, avec des dents de retenue (28) réparties de manière périphérique et s'étendant axialement, et
- une deuxième section d'étanchéité (30) se raccordant à la zone de retenue (26) en direction axiale, avec au moins une dent d'étanchéité (32) périphérique radiale et faisant saillie vers l'extérieur, et
- le corps de support (8) et la douille de pressage (12) étant adaptés pour permettre, au moyen des dents d'étanchéité (24, 32), une étanchéité métallique avec le tube métallique sans joint souple supplémentaire.

2. Dispositif selon la revendication 1,
**caractérisé**
- **en ce que** la première section d'étanchéité (22) et la deuxième section d'étanchéité (30) comportent chacune deux dents d'étanchéité périphériques (24, 32) espacées l'une de l'autre.

3. Dispositif selon la revendication 1 ou 2,
**caractérisé**
- **en ce que** la zone de retenue (26) comporte au moins 10, notamment 16 dents de retenue (28) s'étendant axialement.

4. Dispositif selon l'une des revendications 1 à 3,
**caractérisé**
- **en ce que** la douille de pressage (12) présente un contour intérieur essentiellement cylindrique et un contour extérieur partiellement cylindrique,
- où une première section (38) disposée de manière centrée en direction axiale, une deuxième section (40) voisine en direction distale et une troisième section (42) voisine en direction opposée à la direction distale sont formées,
- où l'épaisseur de matériau de la section (38) disposée de manière centrée est supérieure à l'épaisseur de matériau des sections (40, 42) voisines.

5. Dispositif selon l'une des revendications 1 à 4,
**caractérisé**
- **en ce que** le métal du corps d'appui (8) présente une dureté supérieure à celle du métal de la douille de pressage (12).
